# EUROPEAN PATENT SPECIFICATION

(11) **EP 0 585 495 B1**
(45) Date of publication and mention of the grant of the patent: **28.10.1998**
(21) Application number: 92202678.6
(22) Date of filing: 04.09.1992
(51) Int. Cl.: H04J 3/07, H04J 3/06

(54) **Plesiochronous interface circuit**
Plesiochrone Schnittstellenschaltung
Circuit d'interface plesiochrone

(43) Date of publication of application: 09.03.1994
(73) Proprietor: ALCATEL ALSTHOM COMPAGNIE GENERALE D'ELECTRICITE, 75008 Paris (FR)
(72) Inventor: Van De Pol, Daniel Frans Jozefina, B-2930 Brasschaat (BE); Decaluwe, Jan Maria Jozef, B-1700 Dilbeek (BE); Cloetens, Leon, B-3500 Hasselt (BE)
(74) Representative: Narmon, Gisèle Marie Thérèse

(56) References cited:
- EP-A- 0 397 144
- EP-A- 0 481 400
- ELECTRONICS LETTERS. vol. 21, no. 11, May 1985, STEVENAGE GB pages 487 - 489 HENRY ET AL. '1.7 Gbit/s MULTIPLEXING-DEMULTIPLEXING SYSTEM FOR A HIGH-BIT-RATE OPTICAL LINK'

## Description

The present invention relates to an interface circuit for deriving from an input datastream synchronous with an input clock signal a system datastream synchronous with a system clock signal, the difference between the frequencies of said input and system clock signals having an unknown value comprised between predetermined bounds, and said interface circuit inserting stuffed data in said system datastream at a stuffed datarate dependent upon said difference.

Such an interface circuit is generally known in the art, e.g. from the paper "34 Mbit s⁻¹ PCM Transmission System", by J.V. Martens, Electrical Communication, vol. 52 n^{o} 4, pp. 254-260, 1977 and more particularly the section "Basic Design Features of 2nd Order Equipment". Therein, the interface circuit multiplexes a plurality of input datastreams arriving with a datarate determined by their corresponding input clock signal frequencies into the system datastream which is synchronous with respect to a local system clock signal. Each of the above mentioned input clock signals is plesiochronous with respect to the system clock signal, i.e. the frequency difference between the frequency of such an input clock signal and the frequency of the system clock signal has an unknown value which is comprised between predetermined bounds. This plesiochronism usually arises from the fact that the transmitter module transmitting the input datastream and the receiver module receiving it are controlled by independent clocks determining respectively the frequencies of the input and system clock signals. Ideally both clocks produce frequencies equal to their computed theoretical values resulting in a frequency difference which is fixed and known but practically a slight plesiochronism as mentioned above is unavoidable. To be noted that in the above cited reference the receiver module is a digital multiplexer which includes the present interface circuit.

Consequently the instantaneous input datarates, which are determined by the frequencies of the corresponding input clock signals, cannot be guaranteed to equal a fixed value with respect to the system datarate. The known circuit copes with the above uncertainty in input datarates by increasing the system datarate above the value which would be theoretically sufficient to accommodate the input datarates if no plesiochronism were present, i.e. when the frequencies of the input clock signals would equal their theoretical values.

The above increased system datarate is realized by the well known technique of bit-stuffing which is in the known interface used for multiplexing datastreams from the so-called plesiochronous hierarchies and which is in the cited paper also referred to as positive justification. It indeed provides a system datastream having a system datarate which is higher than the sum of the possible peak input datarates. The latter peak datarates are known from the known peak frequencies of the input and system clock signals, which are dependent upon the quality of the local oscillators used therefore, and can hence be used to derive a suitable system datarate. The excess system datastream which inevitably becomes available in this way is stuffed with irrelevant data and some control information is provided enabling the further circuitry to know wether or not a specific part of the system datastream is such stuffed data.

However, when the known interface circuit is included in a receiver module which performs a link termination and forwards the system datastream to a processing module which for instance demultiplexes the input datastream, the above solution seriously complicates the design of this processing module as clarified below.

Increasing the system datarate as in the above solution indeed either means increasing the system clock signal frequency above its theoretical value or increasing the width of a system data bus above that needed without plesiochronism. In either case the design of the above mentioned processing module becomes more complicated as the designer has to take into account the plesiochronism when designing this module.

The processing module will moreover, due to the above complications, be realized in a sub-optimal way. The system clock signal frequency is indeed normally chosen to be solely dependent on the type of system to be designed and the technology used. An increase in the system datarate is therefore equivalent to an increase in the system data bus width. The latter increase obviously has to be an integer multiple of the byte length in order to be manageable. Such a large increase in the system datarate is however more than needed to cope with the mentioned slight plesiochronism and results in a large rate of stuffed data within the system datastream. As the processing module has to be adapted to handle the total system datarate, this leads to a lot of redundant circuitry.

An object of the present invention is to provide an interface circuit of the above known type but which allows a larger design freedom for the processing module and which minimizes the amount of stuffed data.

According to the invention, this object is achieved due to the fact that said interface circuit derives said system datastream so that it only includes a predetermined fraction of said input datastream, by extracting a complementary not-included fraction from said input datastream, said not-included fraction consisting of control information.

In this way, the datarate of the datastream which actually has to fit in the system datastream is reduced and consequently the system datarate has only to be larger than the corresponding peak datarate of the included fraction. As most transmission protocols provide for the inclusion of a relatively large amount of control information, the included fraction can be so chosen that the last mentioned peak datarate allows as much design freedom as possible for the choice of the system clock frequency and the width of the system data bus. In this way also a minimal amount of stuffed data can be achieved.

This control information can be processed, if so required, apart from the main processing path due to an appropriate design. Such a separate processing creates much less overhead then for instance the above mentioned increase in the system data bus width and requires typically only a small amount of hardware.

It is to be noted that another conventional way of avoiding the above problems is to derive a replica of the transmitter clock in the receiver module by way of a phase locked loop. Such a system indeed avoids the mentioned problem occurring at the processing module but it instead necessitates the use of very complicated phase locked loops and a large input buffer. It is therefore both complex and wasteful of area.

A characteristic feature of the present invention is that said input datastream is arranged in successive frames each including a data field and a control field, and in that said not-included fraction comprises information units from said control field located on predetermined positions within said frames.

Due to the arrangement of the input datastream in frames it is particularly simple to localize a suitable and well-defined not included fraction. The latter fraction is for instance control information included in the input datastream for error check or for frame alignment.

Further characteristic features of the present invention are that said interface circuit includes a frame alignment filter determining the starting positions of said successive frames, that said interface circuit further includes conversion means for extracting said not-included fraction under the control of said starting positions and that said conversion means applies said system datastream to a system data bus of predetermined width and further forwards a data valid indicator on a data valid line to a processing module connected to said system data bus, said indicator indicating wether or not an associated part of said system datastream is stuffed data.

From the above features it can be clearly seen that the system datastream can be derived using a relatively small amount of dedicated circuitry. Indeed, the conversion means uses the information generated by the frame alignment filter to identify which units of the input datastream it has to extract. The latter filter was needed in any case to achieve frame synchronization.

This has the added advantage that the frame alignment pattern can be chosen as the not-included fraction as it is no longer needed in the processing after the conversion means, frame synchronization then already being achieved.

Yet another characteristic feature of the present invention is that said conversion means forwards for each of said frames a value computed from an associated part of said not-included fraction to said processing module in which it is used for further processing of said included fraction.

In conventional transmission protocols the frames usually contain a large amount of control information e.g. for error correction and frame alignment as already mentioned. The information units dedicated to this control information usually are highly redundant so that if they are chosen as not-included fraction the information they carry can be easily analyzed by the interface circuit and forwarded to the processing module where this value is used e.g. for error correction. This results in a slight hardware overhead which is however a small price to pay for the mentioned larger design freedom and considerable hardware savings.

An important aspect of the present invention is that the peak datarate of said included fraction is equal to or lower than an expected value of said input datarate and that said system datarate equals said expected value.

As a result the mentioned processing module can be designed as if there were no plesiochrony between the input and the system clock signal frequencies. Indeed, the system datarate then equals its theoretical value, i.e. the value if the mentioned clock signal frequencies would equal their theoretical values and the input datarate would hence equal the expected input datarate. It is clear that for the above aspect to be realized enough control information has to be present in the input datastream.

A further aspect of the present invention is that said interface circuit further includes input buffer circuitry to which said input datastream is applied, said circuitry producing an intermediate datastream being synchronous with said system clock signal, including all information units of said input datastream and having an intermediate datarate exceeding the peak input datarate, said circuitry inserting intermediate stuffed data at a rate equalling the difference between said intermediate datarate and said input datarate, that said intermediate datastream is applied to said frame alignment filter and that said frame alignment filter also byte-aligns said intermediate datastream and applies a byte-aligned datastream to said conversion means.

By using the above mentioned conventional technique of bit-stuffing, the input datastream can be simply synchronized to the system clock signal. It is relatively easy to derive the required system datastream from such a synchronous intermediate datastream and as a consequence the interface circuit itself can be realized in a relatively simple way.

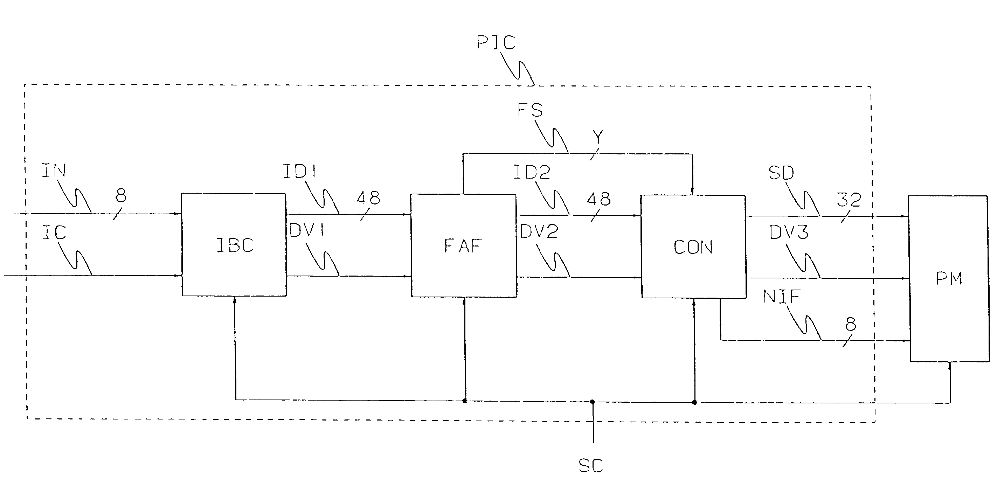

The above mentioned and other objects and features of the invention will become more apparent and the invention itself will be best understood by referring to the following description of an embodiment taken in conjunction with the accompanying drawing which shows a schematic diagram of an interface circuit according to the present invention.

Before describing in detail the plesiochronous interface circuit PIC depicted in the drawing, the format of the input datastream appearing on input terminal IN of PIC will be briefly discussed. The format used in the present embodiment only serves as a clarifying example, the present invention being applicable to a wide range of such formats according to a variety of transmission protocols.

The input datastream applied to the input terminal IN is constituted by synchronous transport modules STM-4c as defined in the synchronous digital hierarchy SDH according to CCITT recommendations G.707, G.708 and G.709. The STM-4c frame is more specifically defined for a 622.08 Mbit/sec transmission rate. One such frame consists of 9 rows of 4 times 270 columns or bytes which are transmitted row per row beginning with the first byte of the first row and ending with the last byte of the last row. The first 4 times 9 bytes of each row together form a control field called section overhead. The remainder of the STM-4c frame forms a data field called payload. The section overhead carries overhead or control information such as pointers, frame alignment patterns etc. In order to protect the information carried in the frame this control information is highly redundant.

It has to be noted that the interface circuit shown in the drawing uses the control information of the frame alignment pattern carried in the STM-4c frames. This pattern occurs at the very beginning of the STM-4c frame and consists, if received without error, of 12 consecutive so-called so-called A1 bytes followed by a further 12 consecutive A2 bytes. Both the A1 and A2 bytes correspond to a predetermined bit sequence for the content of which reference is made to the above mentioned recommendations. The above described pattern is highly redundant and this fact is used advantageously in the present invention as clarified below.

Referring to the drawing the plesiochronous interface circuit PIC will be described in detail.

PIC has an 8 bit wide input terminal IN on which the above described input datastream is applied byte per byte to a first block IBC of PIC. The latter block IBC consists of input buffer circuitry. The datastream applied to IN is synchronous with an input clock signal IC having an input clock frequency of 77.76 MHz which is applied to PIC on a like named input terminal of IBC. IBC is further controlled by a system clock signal SC generated by a local oscillator (not shown) and having a system clock frequency of 19.44 MHz. The input buffer circuitry IBC converts the input datastream to an intermediate datastream which it applies on ID1. The terminal ID1 is 48 bits wide and the intermediate datastream is thus applied to ID1 6 bytes at a time. This intermediate datastream is synchronous with the system clock signal SC. IBC further generates a data valid indicator DV1 which it applies on a like named terminal DV1. DV1 is also synchronous with the system clock signal and indicates wether an associated part of the intermediate datastream on ID1 contains stuffed data or data embedded in the input datastream, as will be clarified later.

ID1 as well as DV1 are then applied to a second block FAF of PIC which is a frame alignment filter also controlled by the system clock signal SC. FAF searches for the frame alignment pattern previously discussed and provides a framing signal FS of Y bits wide on like named terminals indicating the frame synchronization state and the starting position of a frame within the intermediate datastream as will be discussed below. FAF further also byte-aligns the intermediate datastream as received via ID1 and applies the aligned intermediate datastream via terminal ID2, which is again 48 bits wide, to a next block CON. The data valid indicator DV1 is passed on by FAF to CON via the connection DV2.

The mentioned next block CON of PIC is a conversion means operating synchronously with SC and deriving from the intermediate datastream applied on ID2 a system datastream which it applies on terminal SD, which represents a system data bus having a width of 32 bits. The system datastream is applied to SD 4 bytes at a time and synchronously with the system clock signal SC. In deriving this system datastream CON is controlled by the aforementioned framing signal FS and by the data valid indicator applied on DV2. The conversion means CON further also generates a data valid indicator DV3 which it applies on a like named terminal and which indicates wether or not an associated part of the system datastream on SD is stuffed or relevant data as will be clarified below. CON finally generates for each frame a not included fraction signal NIF, which is 8 bits wide and which it computes from a part of the input datastream not included in the system datastream. NIF stays valid during one frame period.

Finally, it has to be noted that PIC forms part of a receiver module which terminates the link on which the aforementioned STM-4c data are transmitted by a corresponding transmitter module (not shown). Therefore, PIC sends the information it derives via SD, DV3 and NIF to a processing module PM which also forms part of the receiver module and which terminates the link, i.e. it demultiplexes the system datastream on SD and forwards the payload to the correct destinations (not shown), processes the overhead information, performs error control etc. Such processing modules are widely known in the art and will therefore not be described in any detail here.

Before describing PIC in detail, it has to be discussed why the design of such an interface circuit is problematic in the first place.

If the input datarate would be equal to a theoretical value of 622.08 Mbit/sec, due to the fact that the input clock signal IC has a frequency of exactly the above mentioned 77.76 MHz, and if the frequency of the system clock signal would be exactly equal to 19.44 MHz, then it is obvious that PIC would be able to provide a synchronous system datastream SD of 32 bits wide which exactly accommodates all information units of the input datastream appearing on IN. It can however not be guaranteed, for instance because of the design tolerances on local oscillators, that the frequencies involved are exactly equal to their theoretical values. Hence, the input datarate and the input clock frequency deviate from 622.08 Mbit/sec and 77.76 MHz respectively. It is to be noted that the above deviation is due to inaccuracies both on the transmitter and receiver end. However, by referencing the input parameters to the time scale of the receiver module, i.e. the system clock frequency, both inaccuracies can be conveniently described by a deviation in these input parameters as will be done throughout the following.

This difference in frequency is known as plesiochronism meaning that the input and system clock signal frequencies are almost synchronous but that the difference between these frequencies is an a priori unknown value comprised between rather tight bounds.

Such plesiochronism can be diminished but not avoided when using independent transmitter and receiver clocks and has then to be dealt with in the interface circuit of the receiver module, therefore called plesiochronous interface circuit. The way of dealing with the above problem will be discussed hereafter in describing the operation of PIC. In the present embodiment the various oscillators realizing the clock signals IC and SC are chosen in such a way that the plesiochronism is confined to +/- 20 ppm of the input clock signal frequency, i.e. with respect to the system clock signal frequency as was noted higher. It is to be noted that this plesiochronism possibly accounts both for a variation in time of the mentioned frequency difference and for a constant frequency mismatch.

In the input buffer circuitry IBC the conventional technique of bit stuffing or oversampling is used to provide an easy way of synchronizing the input datastream arriving on the input terminals IN with the system clock frequency provided via SC. This technique consists, in the present embodiment, in providing an intermediate datastream which has a datarate of 48 bits (width of ID1) times 19.44 MHz or 933.12 Mbit/sec. Theoretically, 1/3 of the thus obtained intermediate datastream can only be filled with stuffed or irrelevant data. Due to the above mentioned plesiochronism however the stuffed datarate, i.e. the rate at which stuffed data is applied to ID1, can be slightly higher or lower than 1/3 of the intermediate datarate. The input datastream can always be converted to this intermediate datastream since the above plesiochronism never results in a peak input datarate exceeding 933.12 Mbit/sec.

It is to be noted here that if this intermediate datastream were to be directly forwarded to the processing module PM this module would have to be designed to handle an input datarate of 933.12 Mbit/sec as it would be a priori unknown whether relevant or irrelevant data were to be processed. Obviously this would result in a lot of redundant circuitry. On the other hand choosing a less dramatic increase in datarate would require another system clock signal frequency thereby complicating the design of the processing module.

IBC generates the intermediate datastream which it applies to ID1 in the following way. The data received via IN is written under control of the input clock in an internal buffer (not shown) having a capacity of 12 bytes. This write operation is performed cyclically in subsequent locations of the input buffer. Independently and under control of the system clock SC this buffer is read out, also cyclically, 6 bytes at a time and applied to ID1. A register keeps track of the write operation in the buffer and if at the time indicated by SC the cyclically next 6 bytes are available these are applied to ID1 together with a 1 indication on DV1 indicating that the present data on ID1 are relevant input data. If these next 6 bytes are not all available yet no new data are applied to ID1 at the instant determined by SC and a 0 is applied to DV1 indicating that the present data, which are actually the previous input data, are irrelevant or stuffed data. At the next time instant determined by SC it will again be examined if the former 6 bytes are already present.

It can be easily verified that if the frequencies of SC and IC are equal to their theoretical values every third 6 bytes appearing on ID1 are stuffed data. In all other cases this sequence is distorted wherefore the first data valid indicator DV1 is necessary.

The intermediate datastream and its associated data valid indications are then passed on to the frame alignment filter FAF which determines the frame synchronization state and the frame starting position, together forming the framing signal FS applied to the like named terminal FS. The synchronization algorithm will not be described in detail as a variety of such algorithms are well known and easily implemented by a person skilled in the art. However, the search for the starting position of the frame will be briefly discussed together with the byte-alignment of the intermediate datastream on the data bus ID2, both being realized in the present block FAF.

FAF does not check the entire frame alignment pattern as described above as this would entail too much circuitry. In fact it suffices for a satisfactory frame synchronization performance if FAF only searches for the occurrence of the byte sequence A1;A1;A2 included in the earlier mentioned alignment pattern 12xA1;12XA2. When this byte sequence is detected, FAF puts the second set of 6 A1 bytes of the corresponding frame on ID2. In this way the data will be byte-aligned on ID2. When FAF has detected the first mentioned sequence enough times to be reliably synchronized, it can start a frame count procedure and generate a frame clock which is sent to the further circuitry via FS. This frame clock is kept high during the first 6 bytes of a frame which are jointly applied to ID2.

In order to be able to apply the second 6 bytes of a frame to ID2 on receiving the sequence A1;A1;A2 FAF has to remember at least 4 older sent previously to the above mentioned A1;A1;A2 sequence.

The above is realized by means of a buffer henceforth called alignment buffer (not shown) which is incorporated in FAF. This buffer receives on every time instant defined by SC 48 new bits via ID1. These bits are stored in the 48 lowest positions of the mentioned buffer. Then 48 parallel combinatorial blocks (not shown) compare 48 successive samples of 24 bits (the number of bits in the byte sequence to be detected) of the intermediate datastream. Such combinatorial blocks can be designed without difficulty by a skilled person wherefore they will not be described in detail. In order to check for each of the 48 bits stored in the lowest positions of the alignment buffer wether it is the first bit of the sequence A1;A1;A2 a further 23 previous bits have to be available to FAF. When in this way a sufficiently reliable frame position is detected, according to the used frame synchronization algorithm, FAF starts a count of the number of bits received during a frame and so determines the above frame clock as being high when the first 6 A1 bytes are applied to ID2.

In order to enable FAF to carry out the above operations the alignment buffer has to store except the 48 bits it has actually received, when A1;A1;A2 is detected, a further 32 previous bits so that the second 6 bytes of the frame can always be applied to ID2 wherever the A1;A1;A2 sequence is detected and yet another 23 previous bits in order to have enough data to carry out the parallel search. Hence, this buffer in total has 103 bit positions. After this search is done the 55 bits in the lower positions of the buffer are written in the 55 highest positions thus leaving place for the subsequent 48 bits arriving via ID1.

The above implies that the received data is no stuffed data, i.e. that a 1 is received on DV1. When a 0 is received on DV1 no relevant new data is available on ID1 as explained earlier. FAF then puts a 0 on DV2 and does not update the alignment buffer or the synchronization algorithm. A clock count of the frame clock is for instance inhibited.

To be noted in this respect that the choice for an intermediate datastream of 48 bits wide is very advantageous as the A1;A1;A2 sequence is then for each frame detected by FAF in the same positions of the alignment buffer. This can be easily verified from the fact that the number of bits in the above described STM-4c frames is an integer multiple of 48. Due to the latter property the frame alignment filter can be kept simple.

Finally the operation of the conversion means CON will be described. CON derives a system datastream which in this particular embodiment of the present invention has a datarate equalling the theoretical value of the input datarate. Consequently the design of the processing module PM, apart from the data valid indicator appearing on DV3, is not affected by the plesiochronism so avoiding a severe complication of the design of PM and a sub-optimal design which includes a lot of redundant circuitry due to a large stuffed datarate as mentioned earlier.

This system datastream is derived by only slightly complicating the interface circuit. Indeed, CON is the only block dedicated to derive the above advantageous system datastream, IBC being needed to provide a simple synchronization of the input datastream to the system clock frequency and FAF performing the essential interfacing functions of frame synchronization and byte-alignment which anyway have to be performed in the receiver module of which PIC forms a part. Thus, only a slight hardware overhead is created by this more complex interface circuit PIC.

CON includes a conversion buffer (not shown) having 96 bit or 12 byte locations where the intermediate data received via ID2 is stored in cyclically subsequent positions of the conversion buffer which provides storage capacity for two such write operations. When a 0 is received on DV2 the associated part of the intermediate datastream received on ID2 is not written in the conversion buffer. The conversion means CON also cyclically scans the subsequent positions of its buffer in order to read synchronously with the system clock frequency 4 bytes at a time, the latter 4 bytes forming subsequent words of the system datastream to be applied on SD.

CON uses the frame clock received via FS to detect which of the data written in the conversion buffer are the first data of the frame. According to the invention CON does not apply the first 4 of these bytes to SD but extracts them from the system datastream. As is clear from the first part of this description these bytes form part of the frame alignment pattern and are not needed in the processing module PM because frame alignment is already performed the moment the datastream reaches CON. With the exception of these 4 bytes, which are the first 4 of the earlier mentioned A1 bytes with which each STM-4c frame starts, CON applies all relevant data of the intermediate datastream to SD. When at a time instant defined by SC the next data to be read out of CON is not available in the conversion buffer, CON applies a 0 data valid indicator on DV3 so as to inform PM that the associated data on SD is stuffed data.

It can be easily verified that by not including 32 bits of the input datastream in the system datastream, as described above, and taking into account the above +/- 20 ppm plesiochronism, the peak datarate of the included fraction which is to be accomodated in the system datastream is always lower than 622.08 Mbit/sec which is the theoretically sufficient value for the system datarate. Hence, only the handling of DV3 and, as discussed further, that of the not-included fraction is to be taken into account in the design of PM.

To be noted that in the above way one could just as well extract more information units of the frame alignment pattern from the system datarate thus further reducing the peak datarate of the included fraction. This would however not give rise to further advantages as the width of SD is constrained to be an integer multiple of the byte length and as extracting more information units could never account, in the present case, for a reduction of the width of SD to 24 bits wherefore such extraction would only complicate the design of PIC without simplifying the design of PM. It is further also to be noted that less than 4 bytes would be enough to account for the +/- 20 ppm plesiochronism but that this value of 4 bytes, being equal to the width of SD, verifiably leads to the simplest conversion means. From the above it is thus clear that the amount of data extracted is determined by the specific parameters of a specific embodiment.

In the present embodiment, the not-included 4 bytes carry, albeit little, information which has to be analyzed. This is done by the conversion means CON itself, which extracts in each frame an 8-bit word from the latter 4 bytes which is the bit interleaved parity of distance 8 or BIP8-value of the corresponding 4 bytes. This value is needed, as can be verified from the above referenced recommendations, to provide for frame error correction. It is applied by CON on NIF and in this way supplied to the processing module PM where it is used for an error check, i.e. the check of the above parity over the STM-4c frame.

It can thus be seen that with little extra hardware in the interface circuit the hardware overhead and complicated design of the processing module PM, due to plesiochronism between input and system clock frequencies, can be avoided. Moreover this is achieved in an elegant and simple way by first synchronizing the input datastream with the system clock signal using the prior art technique.

While the principles of the invention have been described above in connection with specific apparatus, it is to be clearly understood that this description is made only by way of example and not as a limitation on the scope of the invention.

## Claims

1. Interface circuit (PIC) for deriving from an input datastream (IN) synchronous with an input clock signal (IC) a system datastream (SD) synchronous with a system clock signal (SC), the difference between the frequencies of said input and system clock signals having an unknown value comprised between predetermined bounds, and said interface circuit including means to insert stuffed data in said system datastream at a stuffed datarate dependent upon said difference, characterized in that said interface circuit (PIC) is adapted to derive said system datastream (SD) so that it only includes a predetermined fraction of said input datastream (IN), and therefore includes means to extract a complementary not-included fraction (NIF) from said input datastream, said not-included fraction consisting of control information.

2. Interface circuit according to claim 1, characterized in that said input datastream (IN) is arranged in successive frames each including a data field and a control field, and in that said not-included fraction (NIF) comprises information units from said control field located on predetermined positions within said frames.

3. Interface circuit according to claim 2, characterized in that said interface circuit (PIC) includes a frame alignment filter (FAF) determining the starting positions (FS) of said successive frames.

4. Interface circuit according to claim 3, characterized in that said interface circuit (PIC) further includes conversion means (CON) for extracting said not-included fraction (NIF) under the control of said starting positions (FS).

5. Interface circuit according to claim 4, characterized in that said conversion means (CON) applies said system datastream (SD) to a system data bus (SD) of predetermined width and further forwards a data valid indicator (DV3) on a data valid line (DV3) to a processing module (PM) connected to said system data bus (SD), said indicator (DV3) indicating wether or not an associated part of said system datastream is stuffed data.

6. Interface circuit according to claim 4, characterized in that said conversion means (CON) forwards for each of said frames a value computed from an associated part of said not-included fraction (NIF) to said processing module (PM) in which it is used for further processing of said included fraction.

7. Interface circuit according to any of the previous claims, characterized in that the peak datarate of said included fraction is equal to or lower than an expected value of said input datarate (IN) and that said system datarate (SD) equals said expected value.

8. Interface circuit according to claim 4, characterized in that said interface circuit (PIC) further includes input buffer circuitry (IBC) to which said input datastream (IN) is applied, said circuitry (IBC) producing an intermediate datastream (ID1) being synchronous with said system clock signal (SC), including all information units of said input datastream and having an intermediate datarate exceeding the peak input datarate, said circuitry (IBC) inserting intermediate stuffed data at a rate equalling the difference between said intermediate datarate and said input datarate, that said intermediate datastream is applied to said frame alignment filter (FAF) and that said frame alignment filter also byte-aligns said intermediate datastream (ID1) and applies a byte-aligned datastream (ID2) to said conversion means (CON).

9. Interface circuit according to claim 3, characterized in that said successive frames are arranged as defined in the synchronous digital hierarchy specification and that said not-included fraction forms part of the frame alignment pattern.

10. Interface circuit according to any of the previous claims, characterized in that said interface circuit is integrated on an electronic chip.

## Patentansprüche

1. Schnittstellenschaltung (PIC), um aus einem mit einem Eingangs-Taktsignal (IC) synchronen Eingangsdatenstrom (IN) einen mit einem System-Taktsignal (SC) synchronen Systemdatenstrom (SD) zu ermitteln, wobei die Differenz zwischen den Frequenzen der Eingangs- und System-Taktsignale einen zwischen vorbestimmten Grenzen enthaltenen unbekannten Wert aufweist, und wobei die Schnittstellenschaltung ein Mittel enthält, um gestopfte Daten bei einer von der Differenz abhängigen gestopften Datenrate in den Systemdatenstrom einzufügen, dadurch gekennzeichnet, daß die Schnittstellenschaltung (PIC) ausgelegt ist, den Systemdatenstrom (SD) so zu ermitteln, daß er nur einen vorbestimmten Anteil des Eingangsdatenstroms (IN) enthält, und deshalb Mittel enthält, um aus dem Eingangsdatenstrom einen komplementären nicht enthaltenen Anteil (NIF) zu extrahieren, wobei der nicht enthaltene Anteil aus Steuerinformation besteht.

2. Schnittstellenschaltung nach Anspruch 1, dadurch gekennzeichnet, daß der Eingangsdatenstrom (IN) in aufeinanderfolgende Rahmen angeordnet ist, von denen jeder ein Datenfeld und ein Steuerfeld enthält, und daß der nicht enthaltene Anteil (NIF) Informationseinheiten von dem Steuerfeld enthält, die sich an vorbestimmten Positionen innerhalb der Rahmen befinden.

3. Schnittstellenschaltung nach Anspruch 2, dadurch gekennzeichnet, daß die Schnittstellenschaltung (PIC) ein Rahmenausrichtungsfilter (FAF) enthält, das die Startpositionen (FS) der aufeinanderfolgenden Rahmen bestimmt.

4. Schnittstellenschaltung nach Anspruch 3, dadurch gekennzeichnet, daß die Schnittstellenschaltung (PIC) ferner ein Wandlermittel (CON) zum Extrahieren des nicht enthaltenen Anteils (NIF) unter der Steuerung der Startpositionen (FS) enthält.

5. Schnittstellenschaltung nach Anspruch 4, dadurch gekennzeichnet, daß das Wandlermittel (CON) den Systemdatenstrom (SD) einem Systemdatenbus (SD) von vorbestimmter Breite zuführt, und ferner einen Datengültigkeitsanzeiger (DV3) auf einer Datengültigkeitsleitung (DV3) zu einem mit dem Systemdatenbus (SD) verbundenen Verarbeitungsmodul (PM) weiterleitet, wobei der Anzeiger (DV3) anzeigt, ob ein zugeordneter Teil des Systemdatenstroms aus gestopften Daten besteht oder nicht.

6. Schnittstellenschaltung nach Anspruch 4, dadurch gekennzeichnet, daß das Wandlermittel (CON) für jeden der Rahmen einen aus einem zugeordneten Teil des nicht enthaltenen Anteils (NIF) berechneten Wert zu dem Verarbeitungsmodul (PM) weiterleitet, in dem dieser zur weiteren Verarbeitung des enthaltenen Anteils verwendet wird.

7. Schnittstellenschaltung nach einem der vorhergehenden Ansprüche, dadurch gekennzeichnet, daß die Spitzendatenrate des enthaltenen Anteils gleich oder kleiner als ein erwarteter Wert der Eingangsdatenrate (IN) ist, und daß die Systemdatenrate (SD) gleich dem erwarteten Wert ist.

8. Schnittstellenschaltung nach Anspruch 4, dadurch gekennzeichnet, daß die Schnittstellenschaltung (PIC) ferner eine Eingangspuffer-Schaltungsanordnung (IBC) enthält, an die der Eingangsdatenstrom (IN) angelegt ist, wobei die Schaltungsanordnung (IBC) einen Zwischendatenstrom (ID1) erzeugt, der synchron mit dem System-Taktsignal (SC) ist, alle Informationseinheiten des Eingangsdatenstroms enthält und eine Zwischendatenrate aufweist, die die Spitzeneingangsdatenrate übertrifft, wobei die Schaltungsanordnung (IBC) zwischengestopfte Daten mit einer Rate gleich der Differenz zwischen der Zwischendatenrate und der Eingangsdatenrate einfügt, daß der Zwischendatenstrom dem Rahmenausrichtungsfilter (FAF) zugeführt wird, und daß das Rahmenausrichtungsfilter den Zwischendatenstrom (ID1) bytemäßig ausrichtet und einen bytemäßig ausgerichteten Datenstrom (ID2) an das Wandlermittel (CON) anlegt.

9. Schnittstellenschaltung nach Anspruch 3, dadurch gekennzeichnet, daß die aufeinanderfolgenden Rahmen so angeordnet sind, wie dies in der Spezifikation der synchronen digitalen Hierarchie definiert ist, und daß der nicht enthaltene Anteil einen Teil des Rahmenausrichtungsmusters bildet.

10. Schnittstellenschaltung nach einem der vorhergehenden Ansprüche, dadurch gekennzeichnet, daß die Schnittstellenschaltung in einem elektronischen Chip integriert ist.

## Revendications

1. Circuit d'interface (PIC) pour dériver à partir d'un flux de données d'entrée (IN) synchrone avec un signal d'horloge d'entrée (IC) un flux de données système (SD) synchrone avec un signal d'horloge système (SC), la différence entre les fréquences desdits signaux d'horloge d'entrée et de système ayant une valeur inconnue comprise entre des limites prédéterminées, et ledit circuit d'interface comportant un moyen pour insérer des données bourrées dans ledit flux des données système à un débit des données bourrées dépendant de ladite différence, caractérisé en ce que ledit circuit d'interface (PIC) est destiné à dériver ledit flux des données système (SD) de façon qu'il ne comprenne qu'une fraction prédéterminée dudit flux des données système (IN) et par conséquent comporte un moyen pour extraire une fraction non-incluse complémentaire (NIF) dudit flux des données d'entrée, ladite fraction non-incluse étant constituée d'une information de commande.

2. Circuit d'interface selon la revendication 1, caractérisé en ce que ledit flux des données d'entrée (IN) est agencé en trames successives, chacune comprenant une zone de données et une zone de commande, et en ce que ladite fraction non-incluse (NIF) comporte des unités d'information à partir de ladite zone de commande situées sur des positions prédéterminées à l'intérieur desdites trames.

3. Circuit d'interface selon la revendication 2, caractérisé en ce que ledit circuit d'interface (PIC) comporte un filtre d'alignement de trame (FAF) déterminant les positions de départ (FS) desdites trames successives.

4. Circuit d'interface selon la revendication 3, caractérisé en ce que ledit circuit d'interface (PIC) comporte en outre un moyen de conversion (CON) pour extraire ladite fraction non-incluse (NIF) sur la commande desdites positions de départ (FS).

5. Circuit d'interface selon la revendication 4, caractérisé en ce que ledit moyen de conversion (CON) applique ledit flux des données système (SD) à un bus de données système (SD) de largeur prédéterminée et achemine en outre un indicateur de validité de donnée (DV3) sur une ligne de validité des données (DV3) jusqu'à un module de traitement (PM) connecté audit bus de données système (SD), ledit indicateur (DV3) indiquant si oui ou non une partie associée dudit flux de données système est une donnée bourrée.

6. Circuit d'interface selon la revendication 4, caractérisé en ce que ledit moyen de conversion (CON) achemine pour chacune desdites trames une valeur calculée à partir d'une partie associée de ladite fraction non-incluse (NIF) jusqu'audit module de traitement (PM) dans lequel elle est utilisée pour traitement ultérieur de ladite fraction incluse.

7. Circuit d'interface selon l'une quelconque des revendications précédentes, caractérisé en ce que le débit de pointe des données de ladite fraction incluse est égal ou inférieur à une valeur attendue dudit débit des données d'entrée (IN) et en ce que ledit débit des données système (SD) est égal à ladite valeur attendue.

8. Circuit d'interface selon la revendication 4, caractérisé en ce que ledit circuit d'interface (PIC) comporte en outre un ensemble de circuits tampons d'entrée (IBC) auquel ledit flux des données d'entrée (IN) est appliqué, ledit ensemble de circuits (IBC) produisant un flux intermédiaire de données (ID1) synchrone avec ledit signal d'horloge système (SC), comprenant toutes les unités d'information dudit flux des données d'entrée et ayant un débit intermédiaire des données qui excède le débit de pointe des données d'entrée, ledit ensemble de circuits (IBC) insérant les données bourrées intermédiaires à un débit égal à la différence entre ledit débit intermédiaire des données et ledit débit des données d'entrée, en ce que ledit débit intermédiaire des données est appliqué audit filtre d'alignement de trame (FAF) et en ce que ledit filtre d'alignement de trame aligne également en octets ledit flux intermédiaire des données (ID1) et applique un flux de données aligné en octets (ID2) audit moyen de conversion (CON).

9. Circuit d'interface selon la revendication 3, caractérisé en ce que lesdites trames successives sont disposées comme défini dans la spécification de la hiérarchie numérique synchrone, et en ce que ladite fraction non-incluse fait partie de la configuration d'alignement des trames;

10. Circuit d'interface selon l'une quelconque des revendications précédentes, caractérisé en ce que ledit circuit d'interface est intégré sur une puce électronique.
